# EUROPÄISCHE PATENTSCHRIFT

(11) **EP 3 129 160 B1**
(45) Veröffentlichungstag und Bekanntmachung des Hinweises auf die Patenterteilung: **05.06.2019**
(21) Anmeldenummer: 15716756.0
(22) Anmeldetag: 02.04.2015
(51) Int. Cl.: B29C 59/04, B05D 3/06, F15D 1/00, B64C 21/10, B29C 59/02, B05D 5/02, B05D 1/40, B29C 35/08, B29C 43/36

(54) **APPLIKATOR**
APPLICATOR
APPLICATEUR

(30) Priorität: 09.04.2014 DE 202014101661 U; 26.09.2014 DE 202014104613 U
(43) Veröffentlichungstag der Anmeldung: 15.02.2017
(73) Patentinhaber: Airbus Operations GmbH, 21129 Hamburg (DE)
(72) Erfinder: STURM, Thomas, 85259 Wiedenzhausen (DE); HUBER, Helmut, 86574 Axtbrunn (DE)
(74) Vertreter: Bird & Bird LLP
(86) Internationale Anmeldenummer: PCT/EP2015/057365
(87) Internationale Veröffentlichungsnummer: WO 2015/155128

(56) Entgegenhaltungen:
- EP-A1- 2 650 922
- CN-A- 102 463 293
- DE-A1-102006 004 644
- US-A- 5 480 596
- US-A1- 2012 070 623

## Beschreibung

Die Erfindung betrifft einen Applikator für den Auftrag und die prägende Mikroprofilierung eines fluidischen Mediums auf einem Untergrund und insbesondere für den Auftrag und die prägende Mikroprofilierung eines fluidischen Mediums im Aerospace-Bereich, wobei der Applikator eine umlaufend bewegte Matrize mit einem Prägeprofil, ein Andrückmittel für die Matrize, und eine Stabilisierungseinrichtung, insbesondere Aushärteeinrichtung, für das aufgetragene Medium aufweist.

Ein solcher Applikator ist aus der DE 10 2006 004 644 A1 be-kannt. Der Applikator trägt einen aushärtbaren Lack auf einer Substratoberfläche auf und prägt ihn dabei auch an seiner Oberfläche, wodurch der Lack eine Mikrostruktur erhält. Ein solcher Lack mit Mikrostruktur wird auch als riblet bezeichnet. Der Applikator besitzt eine umlaufend bewegbare Matrize mit einem Prägeprofil und wird von einem Roboter gegen den Untergrund, insbesondere die sogenannte Substratoberfläche, angedrückt und an dieser entlangbewegt. Der Applikator hat eine mit Überdruck aufpumpbare Walze, auf deren Außenumfang die Matrize fest aufgezogen ist und durch den Gasdruck gespannt wird. In der Walze ist eine auf den Andrückbereich gerichtete Aushärteeinrichtung angeordnet.

Das Dokument US 5 480 596 A beschreibt ein Gerät und Verfahren zur Herstellung eines optischen Aufzeichnungsträgers oder eines Substratblattes für einen optischen Aufzeichnungsträger. Das Gerät ist so konfiguriert, eine lichthärtende Harzschicht auf mindestens einem Substratblatt und einem Walzenstempel zu bilden, der eine elastische Verformung erfährt. Der Walzenstempel trägt ein Muster, das Vorformatierungsinformationen entspricht und in engen Kontakt mit dem Substratblatt gebracht wird, wobei die lichthärtende Harzschicht zwischen ihnen angeordnet und mittels einer gegenüberliegend zu dem Walzenstempel angeordneten UV-Lampe ausgehärtet wird.

Das Dokument US 2012/070623 A1 umfasst ein Verfahren zur Herstellung eines laminierten Körpers, bei dem eine durch Energiestrahlung aushärtbare Harzzusammensetzung auf eine Basis aufgebracht wird und eine Rotationsfläche eines Rotationsstempels in einen engen Kontakt mit der durch Energiestrahlung aushärtbaren Harzzusammensetzung gebracht wird, die während der Rotation auf die Basis aufgebracht ist.

Das Dokument CN 102 463 293 A beschreibt eine Pressvorrichtung zum Bedrucken von Walzblechen. Die Vorrichtung umfasst einen Zylinder, eine Gleichdruckeinrichtung und eine flexible Matrize.

Es ist Aufgabe der vorliegenden Erfindung, eine verbesserte Applikationstechnik aufzuzeigen.

Die Erfindung löst diese Aufgabe mit den Merkmalen der jeweiligen Hauptansprüche 1 und 4.

Die beanspruchte Applikationstechnik, d.h. der Applikator und das Applikationsverfahren sowie auch eine Applikationseinrichtung, haben verschiedene Vorteile. Mit der Applikationstechnik kann das fluidische Medium, z.B. ein aushärtbarer Lack, mit engeren Toleranzen für die Schichtdicke und für die durch Prägen geschaffene Mikrostruktur aufgebracht werden. Die Haltbarkeit desaufgebrachten Mediums und die technische bzw. physikalische Wirkung der Mikrostruktur können wesentlich verbessert werden. Eine solche Mikrostruktur auf einem Lack kann z.B. auf einer Flugzeughaut für verringerte Luftwiderstände und für erhebliche Treibstoffeinsparungen sorgen. Je exakter die Mikrostruktur definiert und gebildet werden kann, desto größer sind die erzielbaren Effekte.

Der Applikator mit dem hohlen Stützkörper erlaubt eine bessere und genauere Aufnahme und Führung der Matrize, wodurch der mit der Matrize bewirkte Auftrag des fluidischen Mediums verbessert wird. Insbesondere können exakte Randkanten des in Bahnen aufgelegten fluidischen Mediums gebildet werden. Dies sorgt für einen optimalen Anschluss benachbarter Auftragbahnen.

Der beanspruchte Applikator sorgt außerdem im Andrückbereich der Matrize am Untergrund für einen gleichen Anpressdruck. Ein Herauspressen von Lack an den Matrizenrändern kann verhindert werden, wobei auch die besagten scharfen Kanten am Matrizenrand gebildet werden. Der Applikator erlaubt ferner eine wesentlich verbesserte Formanpassung der Matrize im Andrückbereich an die in vielen Fällen nicht ebene Kontur des Untergrunds. Insbesondere können konvexe und konkave Wölbungen des Untergrunds kompensiert und gleichmäßig mit dem geprägten Medium beschichtet werden. Solche Konturen kommen z.B. an Flugzeugen und deren Außenhaut im Rumpfbereich und an den Tragflächen vor.

Bei dem beanspruchten Applikator hat die Matrize eine höhere Standzeit und Lebensdauer als beim Stand der Technik. Die Prägeprofilierung kann an der Außenseite des Matrizenmaterials angeordnet sein. Alternativ kann sie an einer dünnwandigen und biegeelastischen Beschichtung auf der Matrizenaußenseite angebracht sein. Eine solche Beschichtung, z.B. auch in Folienform, kann eine deutlich höhere Standzeit vermitteln und kann z.B. aus Glas oder einem anderen geeigneten Werkstoff bestehen. Dies führt ebenfalls zu einer erhöhten Lebensdauer der Matrize. Die Matrize kann ggf. auch aus einem dünnwandigen, biegeelastischen Glaskörper mit Prägeprofilierung bestehen. Die Matrize kann außerdem bei Bedarf gewechselt werden.

Die Ausbildung des Applikators mit dem Stützkörper und dem im Zwischenraum angeordneten Andrückmittel ist für eine exakte Führung und Positionierung der Matrize von besonderem Vorteil. Außerdem erleichtert sie den Matrizenwechsel. Dieser kann insbesondere automatisiert werden.

Der Applikator weist eine integrierte Stabilisierungseinrich-tung auf, die für eine Stabilisierung, insbesondere Verfestigung, des auf dem Untergrund aufgetragenen fluidischen Mediums und der eingeprägten Mikrostruktur sorgt. Die Stabilisierungseinrichtung kann insbesondere als Aushärteeinrichtung in unterschiedlichsten Varianten ausgebildet sein. Sie kann in oder an einem bevorzugt hohlen Stützkörper angeordnet sein und beaufschlagt das gerade aufgetragene Medium im Andrückbereich der Matrize. Mit einer entsprechenden Handhabungseinrichtung kann der Applikator mit der Matrize derart an den Untergrund angepasst werden, dass sich ein flächiger Andrückbereich ergibt. In diesem Andrückbereich wirkt die Stabilisierungsvorrichtung mit einem emittierten Stabilisierungsmittel, z.B. mit UV-Licht, und härtet beispielsweise das aufgetragene Medium aus. Der flächige Andrückbereich kann dabei in seiner Größe, insbesondere in seiner Erstreckung in Prozess- oder Vorschubrichtung, auf das Stabilisierungs- bzw. Aushärteverhalten des Mediums angepasst werden. In diesem flächigen Andrückbereich wird die Matrize gegen den Untergrund und das aufgetragene Medium mitsamt ihrem Prägeprofil angedrückt. Beim Stabilisieren bzw. Aushärten wird dadurch die Mikrostruktur des aufgetragenen Mediums optimal gesichert und fixiert.

Der Stützkörper ist in der bevorzugten Ausführungsform drehbar gelagert und ist dabei an seinen Mantelbereich mit der Matrize drehschlüssig verbunden. Die drehschlüssige Verbindung kann über das Andrückmittel geschaffen werden, welches vorzugsweise als Druckmittelpolster ausgebildet ist. Die Andrückkraft kann über ein Stellmittel gesteuert oder geregelt werden. Sie kann einerseits an die Betriebserfordernisse und an die prozessgünstige Form der Andrückfläche angepasst werden. Andererseits kann sie deutlich verringert werden, um einen Matrizenwechsel zu erleichtern.

Die Matrize kann ergänzend oder alternativ mit einem eigenen Antrieb am Applikator umlaufend angetrieben werden. Dies kann mittelbar über einen Antrieb des drehbaren Stützkörpers und dessen drehschlüssige Verbindung mit der Matrize erfolgen. Alternativ kann ein Direktantrieb der Matrize vorhanden sein. Durch den eigenen Antrieb kann die Umlaufbewegung der Matrize zusätzlich zu der durch den Applikatorvorschub bewirkten Abwälzbewegung der Matrize beeinflusst werden. Der Antrieb kann hierfür in geeigneter Weise gesteuert oder auch geregelt werden. Diese Antriebsanordnung hat eigenständige erfinderische Bedeutung und kann auch in Verbindung mit einem konventionellen Applikator, z.B. mit dem Applikator aus dem eingangs genannten Stand der Technik, kombiniert werden.

In den Unteransprüchen sind weitere vorteilhafte Ausgestaltungen der Erfindung angegeben.

Unter anderem stellen die folgenden Beispiele Ausführungsbeispiele der Erfindung dar:
Beispiel 1: Applikator für den Auftrag und die prägende Mikroprofilierung eines fluidischen Mediums auf einem Untergrund, wobei der Applikator eine umlaufend bewegte Matrize mit einem Prägeprofil, ein Andrückmittel für die Matrize, und eine Stabilisierungseinrichtung, insbesondere Aushärteeinrichtung, für das aufgetragene Medium aufweist, dadurch gekennzeichnet, dass der Applikator einen hohlen Stützkörper aufweist, den die Matrize unter Bildung eines Zwischenraums mit Abstand umgibt, wobei das Andrückmittel im Zwischenraum angeordnet ist.
Beispiel 2: Applikator nach Beispiel 1, dadurch gekennzeich-net, dass die Stabilisierungseinrichtung in oder an dem Stützkörper (27) angeordnet ist.
Beispiel 3: Applikator nach dem Oberbegriff von Beispiel 1 oder nach Beispiel 1 oder 2, dadurch gekennzeichnet, dass der Applikator einen eigenen Antrieb für die umlaufende Bewegung der Matrize aufweist.
Beispiel 4: Applikator nach Beispiel 1, 2 oder 3, dadurch gekennzeichnet, dass der Applikator einen Anschluss für eine Handhabungseinrichtung, insbesondere für einen Industrieroboter aufweist.
Beispiel 5: Applikator nach einem der vorhergehenden Beispiele, dadurch gekennzeichnet, dass der Stützkörper rohrförmig ausgebildet ist und einen formstabilen Mantel aufweist.
Beispiel 6: Applikator nach einem der vorhergehenden Beispiele, dadurch gekennzeichnet, dass der Stützkörper an einem Gestell des Applikators drehbar gelagert und mit der Matrize drehschlüssig verbunden ist.
Beispiel 7: Applikator nach einem der vorhergehenden Beispiele, dadurch gekennzeichnet, dass der Stützkörper mit dem Antrieb gekoppelt ist.
Beispiel 8: Applikator nach einem der vorhergehenden Beispiele, dadurch gekennzeichnet, dass der Antrieb steuer- oder regelbar ist.
Beispiel 9: Applikator nach einem der vorhergehenden Beispiele, dadurch gekennzeichnet, dass das Andrückmittel als verformbares und den Zwischenraum ausfüllendes Druckmittelpolster ausgebildet ist.
Beispiel 10: Applikator nach einem der vorhergehenden Beispiele, dadurch gekennzeichnet, dass das Druckmittelpolster ein fluidisches Druckmedium, insbesondere Druckgas, in einer dichtenden, biegeelastischen Umhüllung aufweist.
Beispiel 11: Applikator nach einem der vorhergehenden Beispiele, dadurch gekennzeichnet, dass das Druckmittelpolster (33), insbesondere die Umhüllung, mit dem Stützkörper und mit der Matrize drehfest verbunden ist.
Beispiel 12: Applikator nach einem der vorhergehenden Beispiele, dadurch gekennzeichnet, dass das Andrückmittel, insbesondere das Druckmittelpolster, ein Steuermittel zur Steuerung oder Regelung der inneren Andrückkraft auf die Matrize aufweist.
Beispiel 13: Applikator nach einem der vorhergehenden Beispiele, dadurch gekennzeichnet, dass die Matrize als biegeelastische endlose Ringbahn ausgebildet ist.
Beispiel 14: Applikator nach einem der vorhergehenden Beispiele, dadurch gekennzeichnet, dass das Prägeprofil auf der Außenseite des Matrizenmaterials oder auf einer außenseitigen Beschichtung der Matrize angeordnet ist.
Beispiel 15: Applikator nach einem der vorhergehenden Beispiele, dadurch gekennzeichnet, dass die Stabilisierungseinrichtung ein Stabilisierungsmittel emittiert, wobei der Mantel des Stützkörpers, das Andrückmittel und die Matrize für das Stabilisierungsmittel durchlässig sind.
Beispiel 16: Applikator nach einem der vorhergehenden Beispiele, dadurch gekennzeichnet, dass die Stabilisierungseinrichtung als Lichtquelle, insbesondere UV-Lampe, und das Stabilisierungsmittel als Licht, insbesondere UV-Licht, ausgebildet sind.
Beispiel 17: Applikator nach einem der vorhergehenden Beispiele, dadurch gekennzeichnet, dass der Applikator, insbesondere der Stützkörper, randseitig eine lokale Sperre für das emittierte Stabilisierungsmittel aufweist.
Beispiel 18: Applikator nach einem der vorhergehenden Beispiele, dadurch gekennzeichnet, dass der Applikator eine Zuführeinrichtung für das fluidische Medium aufweist.
Beispiel 19: Applikator nach einem der vorhergehenden Beispiele, dadurch gekennzeichnet, dass das fluidische Medium als aushärtbarer Lack ausgebildet ist.
Beispiel 20: Applikator nach einem der vorhergehenden Beispiele, dadurch gekennzeichnet, dass der Applikator eine Reinigungseinrichtung aufweist.
Beispiel 21: Applikationseinrichtung für den Auftrag und die prägende Mikroprofilierung eines fluidischen Mediums auf einem Untergrund, wobei die Applikationseinrichtung einen Applikator und eine Handhabungseinrichtung für eine Relativbewegung zwischen dem Applikator und einem Werkstück aufweist, dadurch gekennzeichnet, dass der Applikator nach mindestens einem der Beispiele 1 bis 20 ausgebildet ist.
Beispiel 22: Applikationseinrichtung nach Beispiel 21, dadurch gekennzeichnet, dass die Handhabungseinrichtung derart ausgebildet und gesteuert ist, dass sie den Applikator entlang des Untergrunds bewegt und ihn dabei mit einer solchen Kraft gegen den Untergrund anpresst, dass die umlaufend bewegte Matrize sich im Andrückbereich verformt und flächig an den Untergrund und dessen Kontur anschmiegt.
Beispiel 23: Applikationseinrichtung nach Beispiel 21 oder 22, dadurch gekennzeichnet, dass die Handhabungseinrichtung einen mehrachsigen programmierbaren Industrieroboter, insbesondere Gelenkarmroboter, aufweist.
Beispiel 24: Applikationseinrichtung nach Beispiel 21, 22 oder 23, dadurch gekennzeichnet, dass die Handhabungseinrichtung einen beweglichen Träger mit einer oder mehreren Bewegungsachsen für den Industrieroboter aufweist.
Beispiel 25: Applikationseinrichtung nach einem der Beispiele 21 bis 24, dadurch gekennzeichnet, dass die Applikationseinrichtung eine Erfassungseinrichtung für die Position und Ausrichtung des Applikators im Prozess und/oder für die Prozessqualität und/oder die Anpresskraft am Untergrund aufweist.

Die Erfindung ist in den Zeichnungen beispielsweise und schematisch dargestellt. Es zeigen:
- Figur 1: eine schematische Ansicht eines Flugzeugs mit einer Applikationseinrichtung und einem Applikator,
- Figur 2: eine schematische Seitenansicht des Applika-tors,
- Figur 3 und 4: Stirnansichten des Applikators gemäß Pfeilen III und IV von Figur 2,
- Figur 5: einen Längsschnitt durch den Applikator von Figur 2,
- Figur 6: ein abgebrochenes und vergrößertes Detail VI von Figur 5,
- Figur 7 bis 10: Schemadarstellungen von Auftragbahnen eines fluidischen Mediums und Teilen des Applikators,
- Figur 11: eine Variante des Applikators und
- Figur 12 bis 16: eine bevorzugte Ausführungsform des Applikators in verschiedenen Ansichten.

Die Erfindung betrifft einen Applikator (2) und ein Applikationsverfahren. Die Erfindung betrifft ferner eine Applikationseinrichtung (1).

Die Erfindung bezieht sich auf Anwendungen im Aerospace-Bereich. Dies betrifft insbesondere Flugzeuge oder andere Flugkörper.

Der Applikator (2) dient dazu, ein fluidisches Medium (6) auf einen Untergrund (5) aufzutragen und dabei das aufgetragene Medium (6) zu prägen, wodurch es an seiner freien Oberfläche ein Profil (7) erhält. Das Profil (7) ist vorzugsweise eine Mikrostruktur mit Erhebungen und Tälern, die eng tolerierte Maße haben können. Der Auftrag erfolgt vorzugsweise bahnförmig, wobei der Applikator (2) und der Untergrund (5) relativ zueinander bewegt werden. Dies wird mittels einer Handhabungseinrichtung (3) der Applikationseinrichtung (1) bewirkt.

Das fluidische Medium (6) kann in unterschiedlicher Weise ausgebildet sein. Es kann eine flüssige oder pastöse, ggf. auch schaumige, Konsistenz haben und kann aus unterschiedlichen Materialien bestehen. Im gezeigten Ausführungsbeispiel ist das fluidische Medium (6) als Lack ausgebildet, der aus einer oder mehreren Komponenten bestehen kann. Das fluidische Medium (6), insbesondere der Lack, kann entsprechend der DE 10 2006 004 644 A1 ausgebildet sein.

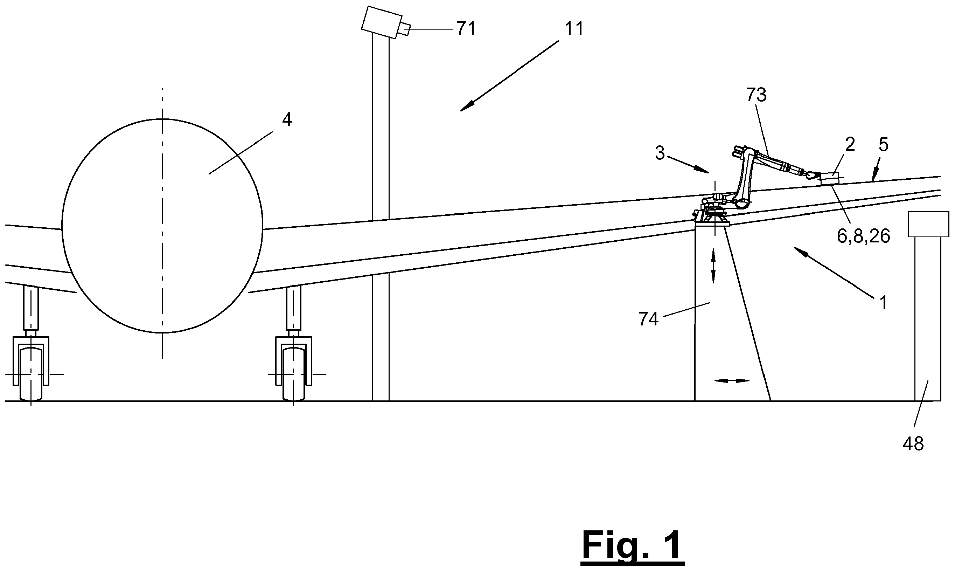

Das Werkstück (4) und der Untergrund (5) können ebenfalls in unterschiedlicher Weise ausgebildet sein. Im gezeigten Ausführungsbeispiel von Figur 1 ist das Werkstück (4) ein Flugzeug. Der Untergrund (5) ist die Außenhaut des Flugzeugs (4). Diese kann eine ebene oder gewölbte Form haben. In den gezeigten Ausführungsbeispielen dienen der Applikator (2) und die Applikationseinrichtung (1) dazu, das Flugzeug (4) an der Außenseite zu lackieren.

Das aufgetragene fluidische Medium (6) bedarf einer Stabili-sierung. Dies kann eine Verfestigung sein, die z.B. durch Aushärten des Mediums (6) erreicht wird. Je nach Art des Mediums (6) und des Einsatzzweckes kann es andere Formen von Stabilisierung geben.

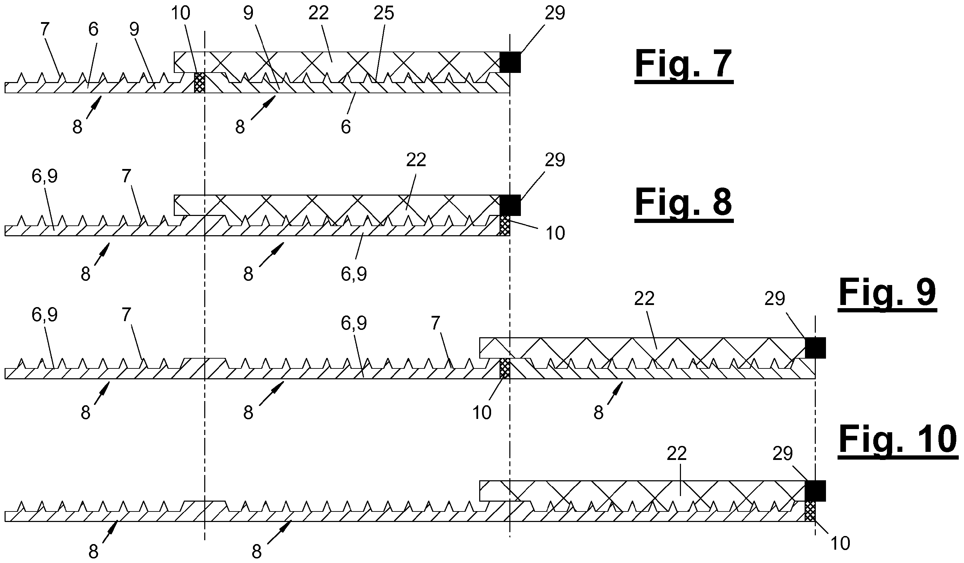

Die Mikrostruktur (7) auf der freien Medienoberfläche kann unterschiedlich ausgebildet sein und unterschiedlichen Zwecken dienen. Bei einem Flugzeug (4), ist eine Ausbildung in der Art einer Haifischhaut von Vorteil. In Figur 7 bis 10 ist eine solche Mikrostruktur (7) schematisch dargestellt. Die Erhebungen und Vertiefungen können sich profilartig längs der Auftragrichtung bzw. der Auftragbahn (8) erstrecken. Mit einer solchen Mikrostruktur (7) bzw. Riblet kann bei einem Flugzeug (4) der Luftwiderstand und damit der Treibstoffverbrauch verringert werden.

Der Applikator (2) stellt in den gezeigten Ausführungsbeispielen ein Auftragwerkzeug für das fluidische Medium (6) dar. Zur Erzeugung der genannten Relativbewegung wird in den Ausführungsbeispielen der Applikator (2) von der Handhabungseinrichtung (3) relativ zu einem ortsfesten Werkstück (4) bewegt. Die kinematische Zuordnung kann bei einer anderen Ausführungsvariante umgekehrt sein. Die in Figur 1 gezeigte Handhabungseinrichtung (3) besteht z.B. aus einem mehrachsigen Industrieroboter (73), der den Manipulator (2) zum Medienauftrag hält und führt. Der Industrieroboter (73) kann eine beliebige Zahl und Anordnung von rotatorischen und/oder translatorischen Roboterachsen haben und besitzt eine Robotersteuerung (nicht dargestellt). Vorzugsweise ist der Industrieroboter (73) als Ge-lenkarmroboter oder Knickarmroboter mit fünf oder mehr Achsen ausgebildet.

Der Industrieroboter (73) kann stationär angeordnet sein. Bei großvolumigen Werkstücken (4) kann der Industrieroboter (73) an oder auf einem Träger (74) in beliebiger, insbesondere hängender oder stehender Lage, angeordnet sein. Der Träger (74) kann beweglich sein, wobei er eine oder mehrere steuerbare Bewegungsachsen mit entsprechenden Antrieben aufweist, die in Figur 1 schematisch durch Pfeile dargestellt sind. Der Träger (74) kann z.B. eine auf dem Boden verfahrbare Hubbühne sein. Die Hubbühne kann ein omnidirektional auf dem Boden verfahrbares und auch drehbares Fördergerät aufweisen, auf dem eine zumindest in der Höhe und ggf. auch in weiteren Achsen verstellbare Hubvorrichtung angeordnet ist. Ein solches Fördergerät kann entsprechend der EP 2 137 053 B1 ausgebildet sein und mehrere Mecanumräder aufweisen. Es kann lenkbar sein und per Fernsteuerung verfahren werden. Alternativ kann es eigenständig einen vorprogrammierten Fahrweg abfahren und dabei zu Steuerungszwecken sowie zur Kollisionsvermeidung die aktuelle Fahrumgebung erfassen.

Der Träger (74) kann z.B. in den drei translatorischen Raum-achsen beweglich sein. Er kann außerdem räumliche Drehachsen aufweisen. Ferner kann er gemeinsam und in abgestimmter Weise mit dem Industrieroboter (73) bewegt werden, wobei er z.B. an die besagte Robotersteuerung oder an eine andere übergeordnete Steuerung angeschlossen ist.

Die Applikationseinrichtung (1), die in den Ausführungsbei-spielen eine Auftrageinrichtung bildet, kann eine Erfassungseinrichtung (11) aufweisen, die unterschiedlichen Zwecken dienen kann. Sie kann einerseits zur exakten Positionierung und Ausrichtung des Applikators (2) im Prozess dienen bzw. diese überwachen. Hierfür kann die Erfassungseinrichtung (11) z.B. die in Figur 1 gezeigte Messeinrichtung (71) aufweisen, die mit einer oder mehreren Messmarken (72), z.B. sog. 6D-Probes, am Applikator (2) zusammenwirkt und hierüber die Position und Ausrichtung des Applikators (2) im Raum während des Prozesses und während der besagten Relativbewegung erfasst. Die Messeinrichtung (71) kann z.B. eine digitale Messkamera oder einen Lasertracker oder eine andere geeignete Messeinheit aufweisen. Die Messeinrichtung (71) arbeitet bevorzugt berührungslos und optisch.

Der Industrieroboter (73) kann mit dem Applikator (2) über eine Wechselkupplung verbunden sein. Er kann dadurch bedarfsweise den Applikator (2) wechseln und einen anderen Applikator (2) oder ein anderes Werkzeug aufnehmen. Die Applikationseinrichtung (1) kann außerdem die in Figur 1 schematisch dargestellte Wechseleinrichtung (48) für eine Matrize (22) des Applikators (2) aufweisen, die im Arbeitsbereich des Industrieroboters (73) angeordnet ist und nachfolgend näher beschrieben wird.

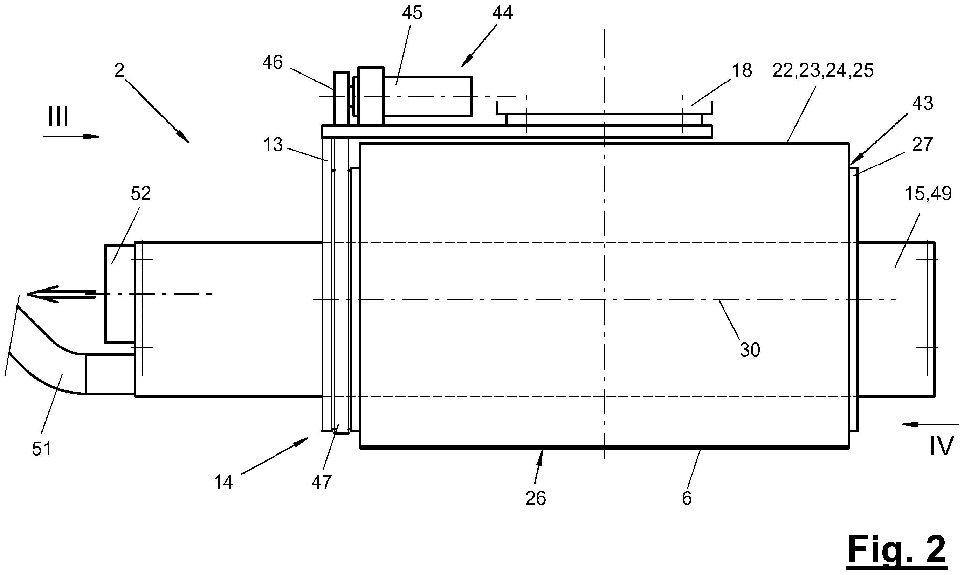

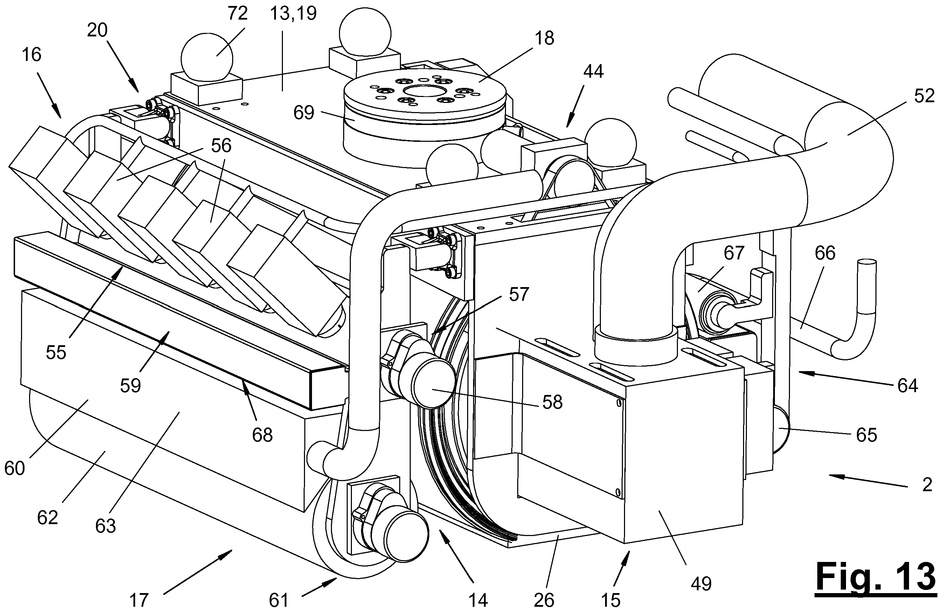

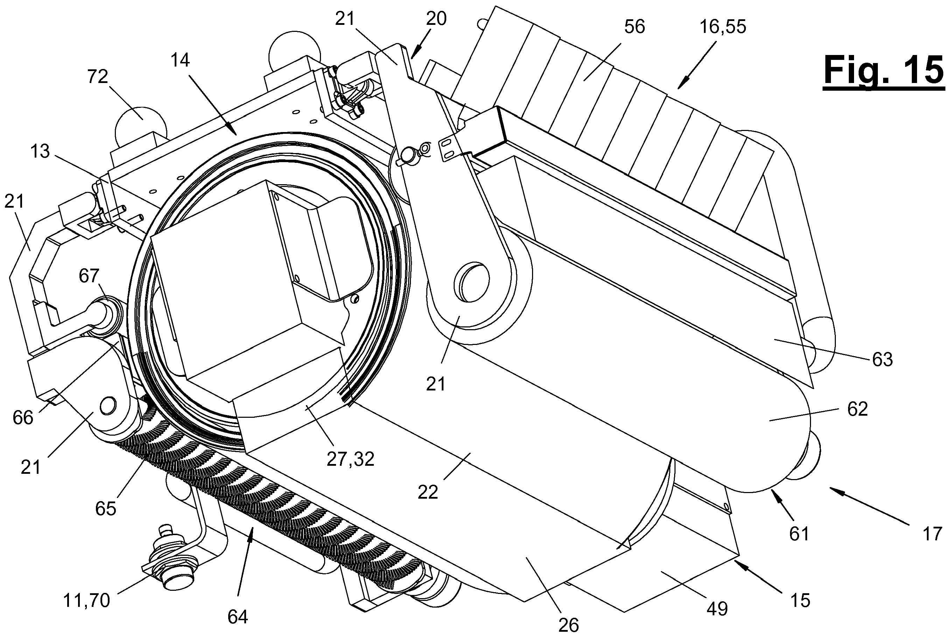

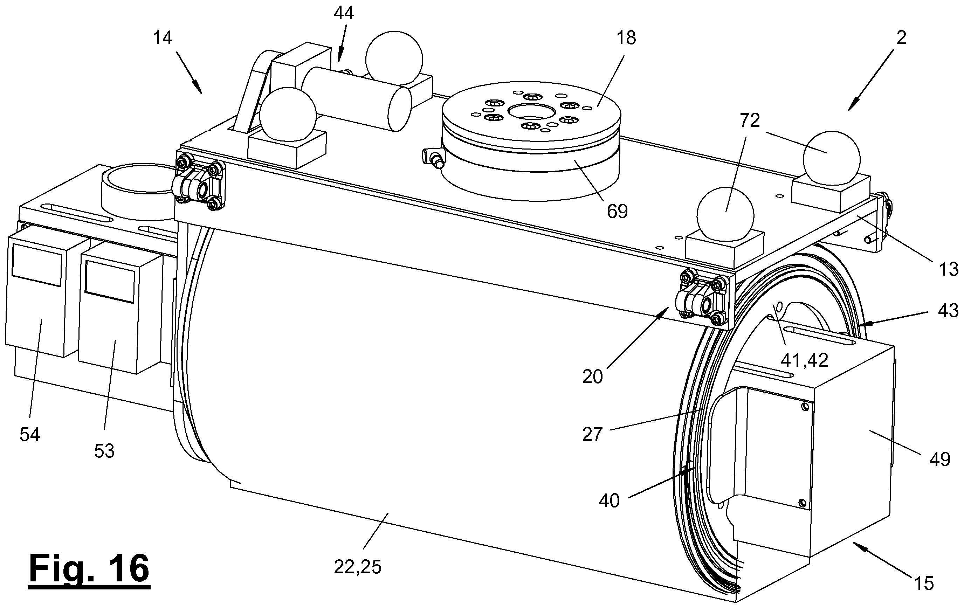

Eine bevorzugte Ausführungsform des Applikators (2) ist in Figur 2 bis 16 dargestellt. Der Applikator (2) weist eine Auftrageinrichtung (14) für das fluidische Medium (6) und eine Stabilisierungseinrichtung (15) für das Medium (6) auf, die z.B. als Aushärteeinrichtung ausgebildet ist. Der Applikator (2) kann ferner eine Zuführeinrichtung (16) für das fluidische Medium (6) und ggf. auch eine Reinigungseinrichtung (17) aufweisen.

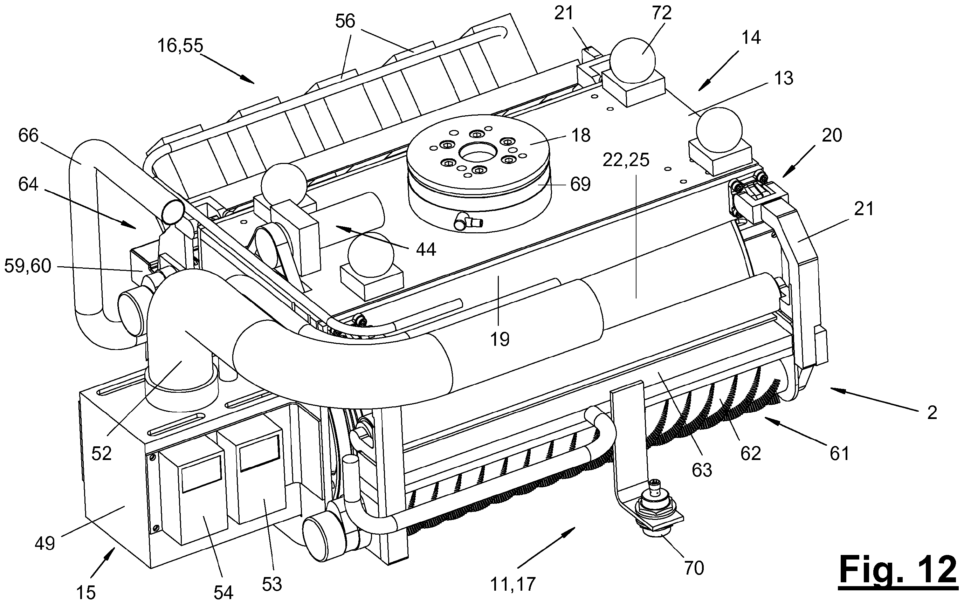

Der Applikator (2) besitzt ein Gestell (13), an dem ein An-schluss (18) für die Verbindung mit dem Abtriebselement der Handhabungseinrichtung (3), insbesondere des Industrieroboters (73) angeordnet ist. Das Gestell (13) kann als Gehäuse (19) ausgebildet sein oder ein solches schützendes Gehäuse aufweisen. Das Gestell (13) kann außerdem eine nachfolgend erläuterte und in Figur 12 bis 16 dargestellte Trageinrichtung (20) für Gerätekomponenten aufweisen, die einen Matrizenwechsel erleichtert und auch dessen Automatisierung erlaubt.

Der Applikator (2) weist eine umlaufend bewegte Matrize (22) auf, die an ihrer Außenseite (24) ein Prägeprofil (25) auf-weist, mit dem das fluidische Medium (6) beim Auftrag auf dem Untergrund (5) mit einer Andrückkraft mechanisch geprägt wird und das Profil (7) bzw. die Mikrostruktur erhält. Die Matrize (22) ist als biegeelastische und endlose Ringbahn (23) ausgebildet. Sie ist dabei vorzugsweise zug- und dehnfest ausgebildet. Sie kann aus einem beliebig geeignetem Material, z.B. einem Kunststoff, insbesondere Silikon, bestehen. Bei einer dehnfesten Ausbildung kann das Prägeprofil (25) eine exakt vorgegebene und im Auftrage- und Prägeprozess beibehaltene Anordnung und Ausbildung haben. Bei weniger hohen Toleranzanforderungen kann die Matrize (22) eine gewisse Zug- und Dehnelastizität haben. Die geschlossene Ringbahn (23) kann die Form eines Rohres oder einer Hülse haben. In den gezeigten Ausführungsbeispielen ist dabei deren Querschnittsgeometrie in der Ausgangsstellung kreisrund. Alternativ sind andere Formgebungen möglich, auf die nachfolgend noch eingegangen wird.

Das Prägeprofil (25) kann direkt auf der Außenseite (24) der Matrize (22) bzw. der Ringbahn (23) angeordnet sein. Das Prägeprofil (25) kann dabei in beliebig geeigneter Weise in die Außenfläche (24) eingearbeitet sein. In einer anderen alternativen Ausführungsform kann die Matrize (22) an der Außenseite (24) eine Beschichtung aufweisen, die z.B. aus Glas oder einem anderen widerstandsfähigen Werkstoff besteht und die das besagte Prägeprofil (25) an ihrer eigenen Außenseite trägt.

Der Applikator (2), insbesondere dessen Auftrageinrichtung (14), weist ferner einen Stützkörper (27) auf, der innerhalb der Matrize (22) mit einem radialen oder quer gerichteten Abstand angeordnet ist. Die Matrize (22) umgibt den Stützkörper (27), wobei sie ihn vorzugsweise allseitig umschließt. Durch den besagten Abstand wird ein Zwischenraum (31) gebildet. Der Applikator (2), insbesondere die Auftrageinrichtung (14), weist ferner ein Andrückmittel (32) für die Matrize auf. Das Andrückmittel (32) ist im Zwischenraum (31) angeordnet und wirkt von innen auf die umgebende Matrize (22) und übt auf diese eine Andrückkraft aus.

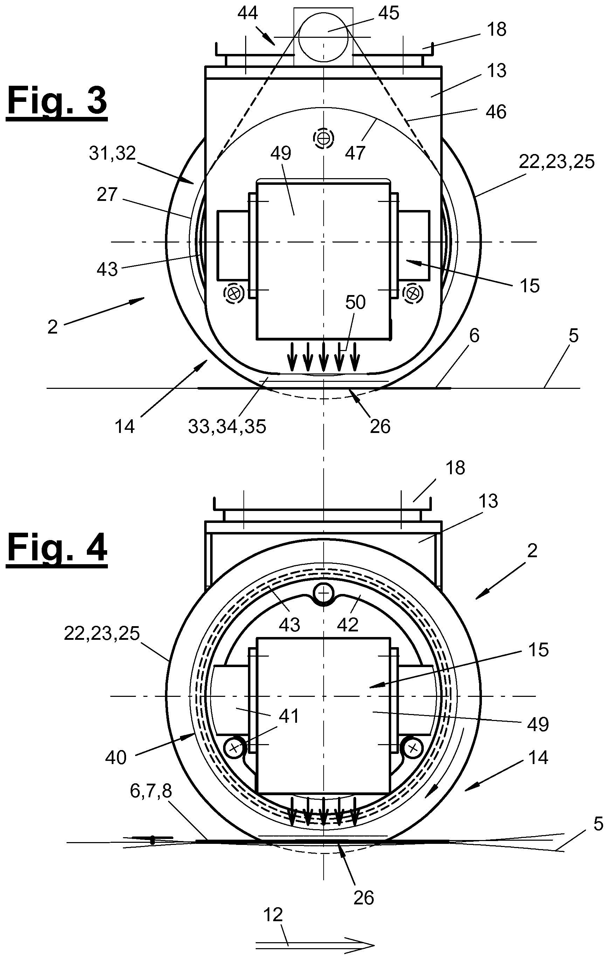

Beim Medienauftrag wird der Applikator (2) von der Handha-bungseinrichtung (3), insbesondere von dem programmierbarem Industrieroboter (73) mit einer definierten und einstellbaren Kraft gegen den Untergrund (5) gedrückt. Hierbei kontaktiert die Matrize (22) mit ihrer Außenseite den Untergrund (5) und verformt sich durch die Zustell- oder Andrückkraft. Sie flacht sich dadurch im Kontaktbereich ab und bildet einen flächigen Andrückbereich (26). Dieser schmiegt sich eng an den evtl. konturierten Untergrund (5) an. Figur 3 und 4 zeigen diese Ausbildung.

Die umlaufend und insbesondere drehend um eine quer gerichtete Achse bewegte Matrize (22) nimmt mit dem Prägeprofil (25) das fluidische Medium (6) von einer Zuführeinrichtung (16) auf, bewegt es mit der Umlauf- oder Drehbewegung gemäß Pfeil in Figur 4 zum Untergrund (5) und überträgt es am Andrückbereich (26) auf den Untergrund (5), wobei auch das Profil (7) durch die Einwirkung der Zustell- oder Andrückkraft geprägt wird. Bei der besagten Relativbewegung mit der in Figur 4 durch einen Pfeil symbolisierten Prozessrichtung oder Vorschubrichtung wälzt die umlaufend bewegte Matrize (22) auf dem Untergrund (5) bei einem Vorschub ab. Im Andrückbereich (26) erfolgt auch die Stabilisierung des aufgetragenen und profilierten Mediums (6) mit der nachfolgend erläuterten Stabilisierungseinrichtung (15).

Die besagte Umlaufbewegung der Matrize (22) wird durch die Relativbewegung bzw. den Vorschub in Prozessrichtung (12) durch Reibkontakt und Abwälzen auf dem Untergrund (5) erzeugt. In der gezeigten und bevorzugten Ausführungsform weist der Applikator (2) zusätzlich einen eigenen Antrieb (44) für die umlaufende Bewegung der Matrize (22) auf. Der Antrieb (44) ist steuerbar oder regelbar und kann ebenfalls mit der besagten Steuerung, insbesondere der Robotersteuerung, verbunden sein. In den gezeigten Ausführungsformen ist der Stützkörper (27) am Gestell (13) des Manipulators (2) mit einer Lagerung (40) drehbar gelagert. Der Stützkörper (27) ist mit der Matrize (22) drehschlüssig verbunden. Die drehschlüssige Verbindung kann z.B. durch das nachfolgend näher erläuterte Andrückmittel (32) gebildet werden. In den gezeigten Ausführungsbeispielen ist der Antrieb (44) mit dem Stützkörper (27) gekoppelt, so dass die Matrize (22) mittelbar angetrieben und über den Drehschluss bei der Drehung des Stützkörpers (27) mitgenommen wird.

Wie Figur 2 bis 6 verdeutlichen, ist der Stützkörper (27) in den gezeigten Ausführungsformen rohrförmig ausgebildet und weist einen formstabilen Mantel (28) auf. Der Stützkörper (27) hat dabei vorzugsweise eine zylindrische Form mit einem kreisrunden Querschnitt, wobei er sich um eine gestellfeste zentrale Achse (30) dreht. Der formstabile Mantel (28) kann die vom Andrückmittel (32) ausgeübten Andrückkräfte auf die Matrize (22) abstützen.

Der Stützkörper (27) ist vorzugsweise hohl ausgebildet und hat die vorerwähnte bevorzugte Zylinder- oder Rohrform. Im Innenraum des hohlen Stützkörpers (27) wird die Stabilisierungseinrichtung (15) aufgenommen. Diese emittiert ein Stabilisierungsmittel (50) zum Andrückbereich (26) und zu dem dort gerade aufgetragenem fluidischen Medium (6). In den gezeigten Ausführungsbeispielen wird das als Lack ausgebildete Medium (6) ausgehärtet. Die Stabilisierungseinrichtung (15) weist hierfür eine Lichtquelle (49) auf, die z.B. als UV-Lampe ausgebildet ist. Das Stabilisierungsmittel (50) bzw. die durch Pfeile sym-bolisierten Lichtstrahlen durchdringen den Mantel (28) des Stützkörpers (27), den Zwischenraum (31) mit dem Andrückmittel (32) und die Matrize (22), die entsprechend lichtdurchlässig ausgebildet sind.

Das in Richtung zum Untergrund (5) emittierte Licht (50) wirkt vorzugsweise auf der gesamten oder zumindest auf einem Großteil der Andrückfläche (26) und härtet das zwischen Matrize (22) und Untergrund (5) befindliche fluidische Medium (6) aus. Durch die Andrückfläche (26) ergibt sich bei der Relativbewegung in Vorschubrichtung (12) eine Einwirkdauer des Stabilisierungsmittels (50), die für eine hinreichende Stabilisierung, insbesondere Verfestigung des Mediums (6) und des Profils bzw. der Mikrostruktur (7) sorgt. Die restliche Stabilisierung, insbesondere Verfestigung bzw. Aushärtung kann nach dem Medienauftrag an der Luft erfolgen.

Die Stabilisierungseinrichtung (15), insbesondere die Licht-quelle (49), kann in dem hohlen Stützkörper (27) angeordnet und aufgenommen sein. Sie kann dabei starr mit dem Gestell (13) verbunden sein. Sie kann aber auch an ein oder beiden Stirnenden des Stützkörpers (27) axial vorstehen. Die Stabilisierungseinrichtung (15), insbesondere die Lichtquelle (49), weist eine Energieversorgung (51) auf. Sie kann auch eine Entsorgung (52) für Schadstoffe haben, z.B. für das beim Aushärten entstehende Ozon. Die Entsorgung (52) kann z.B. eine Absaugung beinhalten. Die Energieversorgung (51) und die Entsorgung (52) können mit entsprechenden Zusatzeinrichtungen am Industrieroboter (73) oder an anderer Stelle verbunden sein. Zur Steuerung der Stabilisierungseinrichtung (15), insbesondere der Lichtquelle (49), können verschiedene Mess- und Steuergeräte vorhanden sein. Beispielsweise sind ein Feuchtemesser (53), insbesondere ein Hygrometer, und ein Thermometer (54) vorhanden. Sie sind bei der in Figur 12 bis 16 dargestellten konstruktiven Ausführungsform des Applikators (2) dargestellt.

Das Andrückmittel (32) kann in unterschiedlicher Weise ausgebildet sein. Es ist in dem z.B. ringförmigen Zwischenraum (31) zwischen dem Mantel (28) des Stützkörpers (27) und der Matrize (22) bzw. der Ringbahn (23) angeordnet. In den gezeigten Ausführungsbeispielen ist das Andrückmittel (32) als verformbares und den Zwischenraum (31) ausfüllendes Druckmittelpolster (33) ausgebildet. Das Druckmittelpolster (33) kann in unterschiedlicher Weise ausgebildet sein. In den gezeigten Ausführungsbeispielen weist es ein fluidisches Druckmedium (35) in einer dichtenden und biegeelastischen Umhüllung (34) auf. Das Druckmedium (35) ist z.B. ein Druckgas, insbesondere Druckluft. Der Innendruck im Druckmittelpolster (33) ist dabei signifikant höher als der Umgebungsdruck, so dass das Druckmittelpolster (33) von innen eine Andrückkraft gegen die umgebende Matrize (22) entwickelt.

Das Druckmittelpolster (33) ist mit dem Stützkörper (27) und mit der Matrize (22) drehfest verbunden. Hierüber wird die Antriebs- und Drehbewegung des Antriebs (44) vom Stützkörper (27) über das Druckmittelpolster (33) auf die Matrize (22) übertragen. Die drehfeste Verbindung zwischen Druckmittelpolster (33) und umgebender Matrize (22) erfolgt durch Reibung und Kraftschluss. Alternativ oder zusätzlich kann durch eine entsprechende Konturierung der Kontaktflächen auch Formschluss bestehen. Die drehfeste Verbindung wird insbesondere über die Umhüllung (34) des Druckmittelpolsters (33) geschaffen.

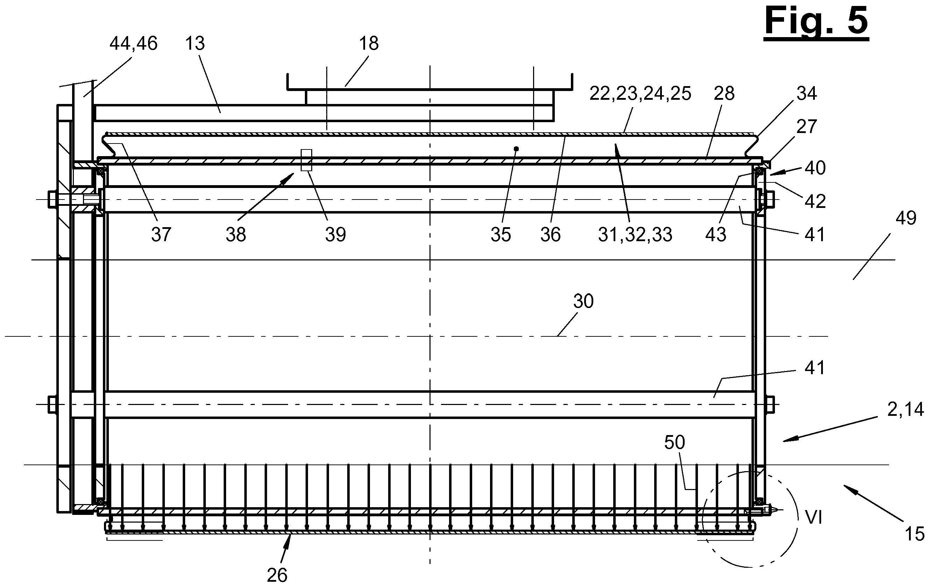

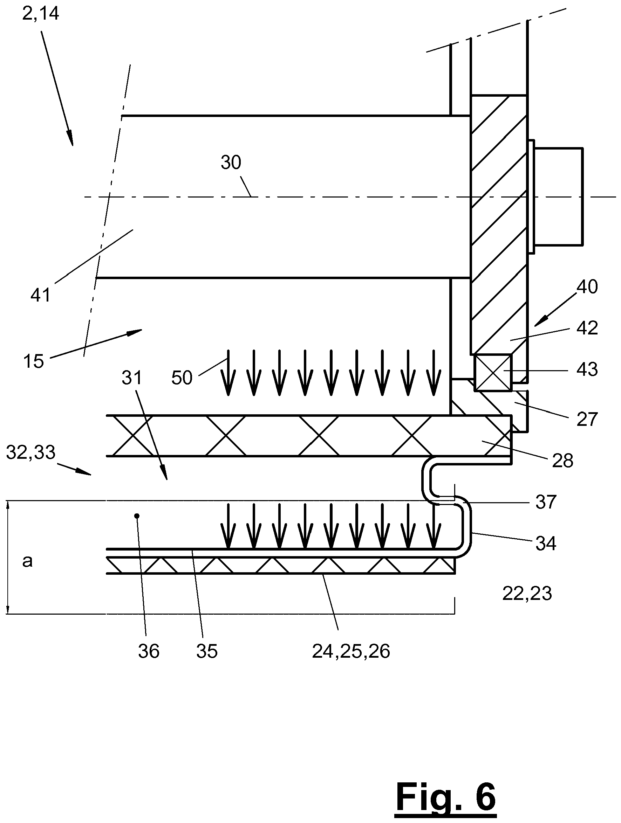

Wie Figur 5 und 6 in der Detaildarstellung verdeutlichen, ist die Umhüllung (34) schlauchförmig ausgebildet. Sie besteht aus einem geeigneten biegeelastischen Material, z.B. einer Kunststofffolie. Die Umhüllung (34) ist außerdem zug- und dehnelastisch. Die Biegesteifigkeit und z.B. die Wandstärke der Matrize (22) bzw. der Ringbahn (23) ist dabei höher als die Biegesteifigkeit der Umhüllung (34).

Die Umhüllung (34) besteht z.B. aus einem ringförmigen Zu-schnitt, dessen Ränder umgeklappt und mit dem Mantel (28) des Stützkörpers (27) fest und dicht verbunden, z.B. verklebt sind. Die schlauchartige Umhüllung (34) erhält dadurch einen in der Ausgangsform zylindrischen Hüllenmantel (36), der den Umfang der Umhüllung (34) bildet. Ferner sind Seitenwände (37) vorhanden, die eine verformungsgünstige Ausbildung haben. Sie sind z.B. in der in Figur 6 gezeigten Weise Z- oder S-förmig gebogen. Alternativ oder zusätzlich kann eine entsprechende Materialausbildung im Seitenwandbereich vorhanden sein.

Die Umhüllung (34) und insbesondere der Hüllenmantel (36) kann sich dadurch im Andrückbereich (26) verformen und an den formsteifen Mantel (28) des Stützkörpers (27) annähern. Unter dem Innendruck des Druckmediums (35), z.B. Druckluft, verformt sich die Umhüllung (34) anschließend wieder nach Außen. Hierdurch ergibt sich der in Figur 6 dargestellte Arbeitsbereich (a). Der Arbeitsbereich und die dadurch mitbestimmte Breite des flächigen Andrückbereichs (26) in Vorschubrichtung (12) kann über die von der Handhabungseinrichtung (3) ausgeübte Zustellung und Anpressung des Applikators (2) und der Matrize (22) an den Untergrund (5) eingestellt und ggf. gesteuert oder geregelt werden. Dies kann auch in Abhängigkeit von der benötigten Einwirkzeit des Stabilisierungsmittels (50), z.B. des UV-Lichts, erfolgen.

Figur 3 bis 6 verdeutlichen die Lagerung (40) des walzenartigen Stützkörpers (27) am Gestell (13). Hierfür ist im Innenraum des hohlen Stützkörpers (27) eine Stützkonstruktion (41) angeordnet, die mit dem Gestell (13) starr verbunden und dort abgestützt ist. An der Stützkonstruktion (41) sind Lagerflansche (42) befestigt, die an den stirnseitigen Randbereichen des Stützkörpers (27) angeordnet sind und die außenseitig ein Lager (43), z.B. ein flaches Ringlager, tragen. Dieses ist seinerseits mit dem Stützkörper (27) verbunden. An der Stützkonstruktion (41) kann außerdem die Stabilisierungseinrichtung (15), insbesondere die Lichtquelle (49) befestigt und fest oder verstellbar positioniert sein.

Der vorerwähnte Antrieb (44) ist am Gestell (13) angeordnet. Er weist einen Motor (45), z.B. einen Elektromotor, und einen Riementrieb (46) oder ein anderes geeignetes Übertragungsmittel auf, welches das Motorritzel mit einem Treibmittel (47) am Stützkörper (27) verbindet. Das Treibmittel (47) kann z.B. von einem Zahnkranz am Außenumfang des zumindest in diesem Bereich zylindrischen Stützkörpers (27) gebildet werden und ist bevorzugt am hinteren Randbereich des Stützkörpers (27) angeordnet.

Das Andrückmittel (32) kann in seiner expansiven Kraftwirkung gesteuert oder auch geregelt werden. Es weist hierfür ein geeignetes Steuermittel (38) auf, welches in Figur 5 angedeutet ist. Bei der gezeigten Ausbildung des Andrückmittels (32) mit einem Druckmittelpolster (33) kann das Steuermittel (38) ein steuerbares Ventil (39) und eine Druckmedienversorgung (nicht dargestellt) umfassen. Hierüber kann das Druckmedium (35), insbesondere ein Druckgas, zugeführt oder abgelassen werden. Durch Zufuhr wird der Innendruck in der gewünschten Weise erhöht. Ein fluidisches, insbesondere gasförmiges Druckmedium (35) hat dabei den Vorteil, dass im Andrückbereich (26) ein konstanter Druck und eine hieraus entstehende konstante Andrückkraft bestehen. Falls die Matrize (22) bzw. das Prägeprofil (25) verschlissen sind, kann die Matrize (22) ausgetauscht werden. Hierfür wird z.B. Druckmedium (35) abgelassen und der Innendruck des Druckmittelpolsters (33) verringert, so dass an der vorerwähnten Wechseleinrichtung 48) die Matrize (22) abgezogen und eine neue Matrize (22) aufgezogen und aufgesteckt werden kann.

Figur 7 bis 10 verdeutlichen den Medienauftrag in mehreren Schritten und in abgebrochenen Schnittdarstellungen. Die Auftragbahnen (8) werden exakt parallel und mit einem definierten Abstand nebeneinander auf dem Untergrund (5) platziert. Die Auftragbahnen (8) können dabei über ihre Breite beim Auftrag vollständig oder teilweise stabilisiert werden. Figur 7 bis 8 verdeutlichen außerdem den Fall, dass die Breite der Matrize (22) größer als die Breite der Auftragbahn (8) sein kann, wobei sich auch das Prägeprofil (25) nur über einen Teilbereich der Matrizenbreite erstreckt. An einem Randbereich der Matrize (22) kann eine Sperre (29) umlaufend angeordnet sein, die den Durchtritt des Stabilisierungsmittels (50), insbesondere des UV-Lichts, verhindert. Auf der gegenüberliegenden Seite kann die Matrize (22) über das Prägeprofil (25) und den Auftragbereich seitlich hinaus stehen. Im Bereich der Sperre (29) wird das fluidische Medium (6) von der Matrize (22) mitgenommen und auf dem Untergrund aufgetragen, wobei es aber beim Auftrag nicht stabilisiert wird. Es entsteht hierdurch der in den Zeichnungen dargestellte unverfestigte Bereich (10), der auch als Nassbereich bezeichnet wird. In den anderen Bereichen kann das aufgetragene fluidische Medium (6) stabilisiert und insbesondere ausgehärtet werden, wobei hier der in den Zeichnungen dargestellte verfestigte Strukturbereich (9) entsteht. Der unverfestigte Bereich (10) wird bei Applizierung der benachbarten Auftragbahn (8) stabilisiert und verfestigt bzw. ausgehärtet. Dies geschieht durch den der Sperre (29) axial gegenüberliegenden und über das Prägeprofil (25) seitlich hinausstehendem Matrizenrand und dem dortigen Durchtritt des Stabilisierungsmittels (50). Zugleich wird bei der nächsten Auftragbahn (8) wieder ein unverfestigter Bereich

(10) gebildet. Bei der nachträglichen Verfestigung geht dieser Bereich (10) eine innige Verbindung mit den anderen zuvor verfestigten Strukturbereichen (9) ein. Die aneinander grenzenden Randbereiche der Auftragbahnen (8) sind in Figur 7 bis 10 als Erhebungen ausgebildet. Alternativ können hier Vertiefungen sein.

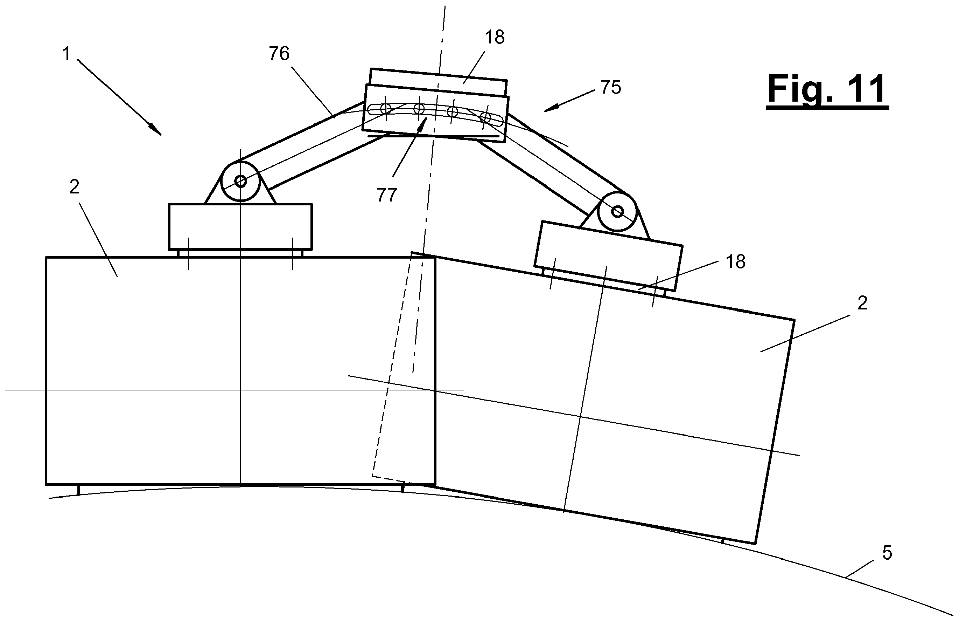

Figur 11 zeigt eine Variante der Applikationseinrichtung (1). Hier sind zwei oder mehr Applikatoren (2) in Vorschubrichtung mit Versatz nebeneinander und hintereinander angeordnet. Sie befinden sich an einem gemeinsamen Halter (75), der mit der Handhabungseinrichtung (3), insbesondere dem Industrieroboter (73) durch einen Anschluss (18) verbunden ist. Der Halter (75) weist zwei oder mehr Halterarme (76) auf, die an den Enden mittels gelenkiger Anschlüsse oder dergleichen mit den Anschlüssen (18) der Applikatoren (2) verbunden sind. Die Rela-tivstellung der Applikatoren (2) kann durch eine Stelleinrichtung (77) am Halter (75) verändert werden. Hierdurch können Neigung und ggf. auch Abstand der Halterarme (76) gezielt eingestellt und bedarfsweise verändert werden.

In Figur 12 bis 16 ist eine konstruktive Ausführungsform des Applikators (2) dargestellt. Dieser ist entsprechend der vorbeschriebenen Ausführungsbeispiele von Figur 2 bis 6 ausgebildet. In den konstruktiven Ausführungsformen sind zusätzlich die Zuführeinrichtung (16) und die Reinigungseinrichtung (17) ersichtlich.

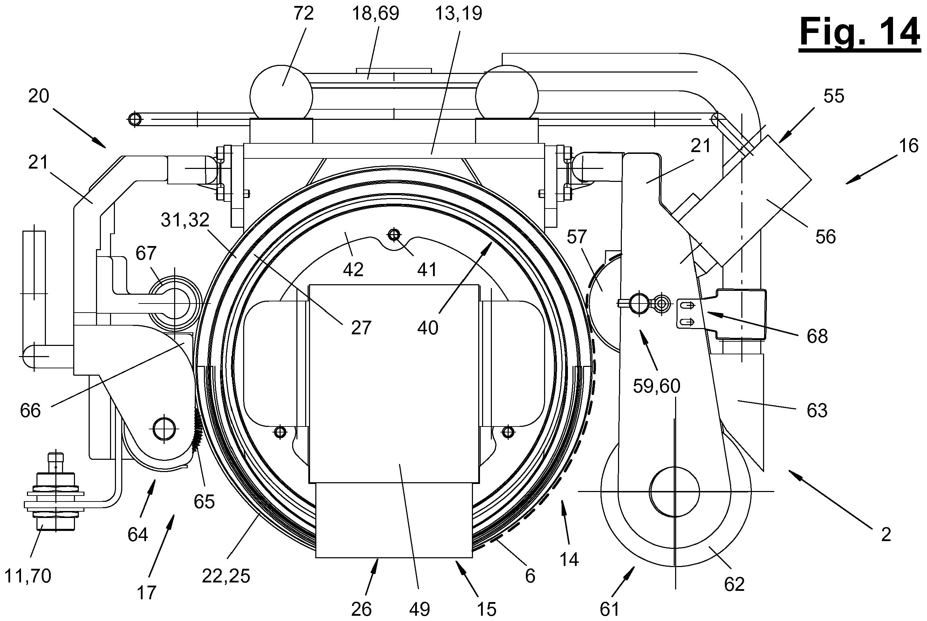

Die Zuführeinrichtung (16) ist mit einer externen Medienver-sorgung (nicht dargestellt) verbunden oder kann einen mitge-führten Vorratsbehälter aufweisen. Sie besitzt eine Dosiereinrichtung (55) für den Medienauftrag. Hierfür sind z.B. mehrere längs der Achse (30) aufgereihte Auftragdüsen (56) vorgesehen, die gesteuert oder geregelt eine Fluidmenge abgeben. Die Fluidübertragung an die Matrize (22) kann über eine Verteilwalze (57) erfolgen, die zwischen den Auftragdüsen (56) und der Matrize (22) angeordnet ist, und die mit einem steuerbaren oder ggf. regelbaren Antrieb (58) versehen ist, welcher seinerseits mit der vorerwähnten Steuerung, insbesondere Robotersteuerung, verbunden sein kann. Figur 14 zeigt die Anordnung und verdeutlicht schematisch die Übergabe des fluidischen Mediums (6) an die Matrize (22) und deren Prägeprofil (25).

Die Zuführeinrichtung (16) kann ferner eine Entsorgungsein-richtung (59) für Medienrückstände aufweisen. Diese weist z.B. einen Schaber oder ein anderes geeignetes Abtragsmittel auf, um Medienrückstände vom Mantel der Verteilwalze (57) abzulösen und in einem Behälter oder dergleichen aufzufangen. Die Entsorgungseinrichtung (59) kann ferner eine Absaugung (60) oder ein anderes Mittel zum Abtransport der Medienrückstände aufweisen. Die Entsorgungungseinrichtung (59) kann ferner einen separaten Medienbehälter aufweisen, in dem in Prozesspausen Medium (6) abgegeben werden kann, um ein vorzeitiges Aushärten im Zuführbereich zu vermeiden.

Die Reinigungseinrichtung (17) kann mehrteilig ausgebildet sein. Sie weist z.B. ein Reinigungsmittel (61) für den Untergrund (5) auf. Dieses besteht z.B. aus einer rotierend gelagerten Büste (62), die ggf. mit einem eigenen Antrieb steuer- oder regelbar angetrieben wird. Der Bürste (62) kann eine Entsorgung (63) zugeordnet sein, die z.B. als Absaugung für die aufgenommenen Schmutzpartikel oder dergleichen ausgebildet ist. Das Reinigungsmittel (61) für den Untergrund kann in Vorschubrichtung (12) vor der Matrize (22) und unterhalb der Zuführeinrichtung (16) angeordnet sein.

Die Reinigungseinrichtung (17) kann ferner ein Reinigungsmittel (64) für die Matrize (22) aufweisen. Dieses kann an der in Vorschubrichtung (12) hinteren Applikatorseite angeordnet sein. Es weist z.B. eine gegen die Außenseite (24) der Matrize (22) angestellte walzenförmige Bürste (65) auf, die ebenfalls rotierend und ggf. steuer- oder regelbar angetrieben ist. Der Bürste (65) kann eine Entsorgung (66) für die von der Matrize (22) abgelösten Medienrückstände zugeordnet sein, die z.B. als Absaugung ausgebildet ist. Ferner kann oberhalb der Bürste (65) eine elektrostatische Rolle (67) oder eine Adhäsionsrolle angeordnet und gegen die Matrize (22) außenseitig angestellt sein, welche weitere und evtl. noch anheftende Medienpartikel abnimmt und ggf. mit der Entsorgung (66) verbunden ist.

Die Reinigungseinrichtung (17) kann ferner ein Reinigungsmittel (68) für die Medienzuführung (16) aufweisen. Dies kann die vorgenannte Entsorgungseinrichtung (59) oder eine andere Einrichtung sein.

Figur 12 bis 16 verdeutlichen außerdem weitere Bestandteile der Erfassungseinrichtung (11). Diese weist z.B. einen Belastungssensor (69) zur Erfassung der beim Medienauftrag wirkenden Zustell- und Andrückkraft auf. Der Belastungssensor (69) kann z.B. am Anschluss (18) oder an einer anderen geeigneten Stelle, ggf. auch am Industrieroboter (73), angeordnet sein. Er kann als Kraft/Momentensensor ausgebildet sein. Der Belastungssensor (69) ist mit der Steuerung, insbesondere Robotersteuerung, verbunden.

Die Erfassungseinrichtung (11) kann ferner einen Prüfsensor (70) aufweisen, der z.B. zur Qualitätsprüfung des aufgetragenen fluidischen Mediums (6) und ggf. auch zur Qualitätsprüfung der Mikrostruktur (7) eingesetzt wird. Er kann in Vorschubrichtung (12) an der Applikatorrückseite angeordnet sein und mit dem Gestell (13) in geeigneter Weise verbunden sein. Der Sensor (70) ist z.B. als optischer Sensor, als Näherungsensor oder in anderer geeigneter Weise ausgebildet. Die Erfassungseinrichtung (11) kann darüber hinaus einen oder mehrere weitere Sensoren für Betriebszustände oder dergleichen der Auftrageinrichtung (1) und ihrer Komponenten aufweisen.

Abwandlungen der gezeigten und beschriebenen Ausführungsformen sind in verschiedener Weise möglich, insbesondere können die Merkmale der beschriebenen Ausführungsbeispiele und der genannten Abwandlungen beliebig miteinander kombiniert und ggf. auch ausgetauscht werden.

In einer nicht dargestellten Variante kann der Stützkörper stationär angeordnet und am Gestell (13) gehalten sein, wobei die Matrize (22) umlaufend in der Art einer Panzerkette um den Stützkörper umlaufend herumbewegt wird. Der Antrieb (44) kann auch direkt auf die Matrize (22) einwirken, die hierfür z.B. am Rand an geeigneten Stützstellen ein Treibmittel (47) aufweist. Ferner kann die Stabilisierungseinrichtung (15) in oder an dem Stützkörper (27) angeordnet sein. Ein stationärer Stützkörper (27) kann hierfür entsprechend hohl ausgebildet sein. Das Andrückmittel (32) ist bei stationärem Stützkörper (27) und umlaufender Matrize in entsprechender Weise ausgebildet und kann die Roll- oder Umlaufbewegung ermöglichen.

In Variation zu den gezeigten Ausführungsbeispielen kann ein Druckmedium (35) in anderer Weise ausgebildet sein, z.B. als anderes Fluid. Dies kann z.B. eine flüssige oder pastöse Konsistenz haben und z.B. aus einem Gel bestehen.

Weitere Variationen sind hinsichtlich der Stabilisierung des fluidischen Mediums (6) möglich. Eine Stabilisierung, insbe-sondere Verfestigung oder Aushärtung kann auch auf anderem Wege, z.B. durch Wärmezufuhr, Bestrahlung, elektrische Wechselfelder oder dergleichen erfolgen. Das Stabilierungsmittel (50) ist entsprechend ausgebildet. Auch die Durchlässigkeit des Stützkörpers (27), des Zwischenraums (31) mit dem Andrückmittel (32) und der Matrize (22) ist dann entsprechend abgeändert und angepasst.

### BEZUGSZEICHENLISTE

- 1: Applikationseinrichtung, Auftrageinrichtung
- 2: Applikator, Auftragwerkzeug
- 3: Handhabungseinrichtung
- 4: Werkstück, Flugzeug
- 5: Untergrund, Flugzeughaut
- 6: Medium, Lack
- 7: Mikrostruktur, Profil
- 8: Auftragbahn
- 9: verfestigter Strukturbereich
- 10: unverfestigter Bereich, Nassbereich
- 11: Erfassungseinrichtung
- 12: Prozessrichtung, Vorschubrichtung
- 13: Gestell
- 14: Auftrageinrichtung für Medium
- 15: Stabilisierungseinrichtung, Aushärteeinrichtung
- 16: Zuführeinrichtung für Medium
- 17: Reinigungseinrichtung
- 18: Anschluss Roboter
- 19: Gehäuse
- 20: Trageinrichtung
- 21: Tragarm, Schwenkarm
- 22: Matrize
- 23: Hülse, Ringbahn
- 24: Außenseite
- 25: Prägeprofil, Gegenprofil
- 26: Andrückbereich
- 27: Stützkörper, Walze
- 28: Mantel
- 29: Sperre, Abdeckung
- 30: Achse
- 31: Zwischenraum
- 32: Andrückmittel
- 33: Druckmittelpolster
- 34: Umhüllung, Schlauch
- 35: Druckmedium, Druckluft
- 36: Hüllenmantel, Schlauchmantel
- 37: Seitenwand
- 38: Steuermittel
- 39: Ventil
- 40: Lagerung
- 41: Stützkonstruktion
- 42: Lagerflansch
- 43: Lager, Ringlager
- 44: Antrieb
- 45: Motor
- 46: Riementrieb
- 47: Treibmittel, Zahnkranz
- 48: Wechseleinrichtung für Matrize
- 49: Lichtquelle, UV-Lampe
- 50: Stabilisierungsmittel, Lichtstrahl
- 51: Energieversorgung
- 52: Entsorgung, Absaugung
- 53: Feuchtemesser, Hygrometer
- 54: Thermometer
- 55: Dosiereinrichtung
- 56: Auftragdüse
- 57: Verteilwalze
- 58: Antrieb
- 59: Entsorgungseinrichtung Medienrückstände
- 60: Absaugung
- 61: Reinigungsmittel für Untergrund
- 62: Bürste
- 63: Entsorgung, Absaugung
- 64: Reinigungsmittel für Matrize
- 65: Bürste
- 66: Entsorgung, Absaugung
- 67: elektrostatische Rolle
- 68: Reinigungsmittel für Medienzuführung
- 69: Belastungssensor, Kraft/Momentensensor
- 70: Sensor, Prüfsensor
- 71: Messeinrichtung, Messkamera, Lasertracker
- 72: Messmarke
- 73: Industrieroboter
- 74: Träger
- 75: Halter
- 76: Haltearm
- 77: Stelleinrichtung

- a: Arbeitsbereich

## Patentansprüche

1. Applikator für den Auftrag und die prägende Mikroprofilierung eines fluidischen Mediums (6) auf einem Untergrund (5) im Aerospace-Bereich, wobei der Applikator (2) eine umlaufend bewegte Matrize (22) mit einem Prägeprofil (25), ein Andrückmittel (32) für die Matrize (22), und eine Stabilisierungseinrichtung (15), insbesondere Aushärteeinrichtung, für das aufgetragene Medium (6) aufweist, **dadurch gekennzeichnet, dass** der Applikator (2) einen hohlen Stützkörper (27) aufweist, den die Matrize (22) unter Bildung eines Zwischenraums (31) mit Abstand umgibt, wobei das Andrückmittel (32) im Zwischenraum (31) angeordnet ist, wobei das Andrückmittel (32) ein Steuermittel (38) zur Steuerung oder Regelung einer inneren Andrückkraft auf die Matrize (22) aufweist.

2. Applikator nach Anspruch 1, **dadurch gekennzeichnet, dass** die Stabilisierungseinrichtung (15) in oder an dem Stützkörper (27) angeordnet ist.

3. Applikator nach Anspruch 1 oder 2, **dadurch gekennzeichnet, dass** der Applikator (2) einen eigenen Antrieb (44) für die umlaufende Bewegung der Matrize (22) aufweist.

4. Applikator nach dem Oberbegriff von Anspruch 1, **dadurch gekennzeichnet, dass** der Applikator (2) einen eigenen Antrieb (44) für die umlaufende Bewegung der Matrize (22) aufweist, wobei das Andrückmittel (32) ein Steuermittel (38) zur Steuerung oder Regelung einer inneren Andrückkraft auf die Matrize (22) aufweist.

5. Applikator nach Anspruch 1, 2, 3 oder 4, **dadurch gekennzeichnet, dass** der Applikator (2) einen Anschluss (18) für eine Handhabungseinrichtung (3), insbesondere für einen Industrieroboter (73) aufweist.

6. Applikator nach einem der vorhergehenden Ansprüche, **dadurch gekennzeichnet, dass** der Stützkörper (27) rohrförmig ausgebildet ist und einen formstabilen Mantel (28) aufweist.

7. Applikator nach einem der vorhergehenden Ansprüche, **dadurch gekennzeichnet, dass** der Stützkörper (27) an einem Gestell (13) des Applikators (2) drehbar gelagert (43) und mit der Matrize (2) drehschlüssig verbunden ist.

8. Applikator nach einem der vorhergehenden Ansprüche, **dadurch gekennzeichnet, dass** der Stützkörper (27) mit dem Antrieb (44) gekoppelt ist.

9. Applikator nach Anspruch 8, **dadurch gekennzeichnet, dass** der Antrieb (44) Steuer- oder regelbar ist.

10. Applikator nach einem der vorhergehenden Ansprüche, **dadurch gekennzeichnet, dass** das Andrückmittel (32) als verformbares und den Zwischenraum (31) ausfüllendes Druckmittelpolster (33) ausgebildet ist.

11. Applikator nach Anspruch 10, **dadurch gekennzeichnet, dass** das Druckmittelpolster (33) ein fluidisches Druckmedium (35), insbesondere Druckgas, in einer dichtenden, biegeelastischen Umhüllung (34) aufweist.

12. Applikator nach einem der vorhergehenden Ansprüche 10 oder 11, **dadurch gekennzeichnet, dass** das Druckmittelpolster (33), insbesondere die Umhüllung (34), mit dem Stützkörper (27) und mit der Matrize (22) drehfest verbunden ist.

13. Applikator nach einem der vorhergehenden Ansprüche, **dadurch gekennzeichnet, dass** die Matrize (22) als biegeelastische endlose Ringbahn (23) ausgebildet ist.

14. Applikator nach einem der vorhergehenden Ansprüche, **dadurch gekennzeichnet, dass** das Prägeprofil (25) auf der Außenseite (24) des Matrizenmaterials oder auf einer außenseitigen Beschichtung der Matrize (22) angeordnet ist.

15. Applikator nach einem der vorhergehenden Ansprüche, **dadurch gekennzeichnet, dass** die Stabilisierungseinrichtung (15) ein Stabilisierungsmittel (50) emittiert, wobei der Mantel (28) des Stützkörpers (27), das Andrückmittel (32) und die Matrize (22) für das Stabilisierungsmittel (50) durchlässig sind.

## Claims

1. Applicator for the application and the embossing micro-profiling of a fluidic medium (6) on a substrate (5) in the aerospace sector, wherein the applicator (2) has a die (22), moved in a revolving manner, having an embossing profile (25), a contact-pressure means (32) for the die (22), and a stabilizing installation (15), in particular a curing installation, for the applied medium (6), **characterized in that** the applicator (2) has a hollow support member (27) which the die (22) while forming an intermediate space (31) surrounds by way of a spacing, wherein the contact-pressure means (32) is disposed in the intermediate space (31), wherein the contact-pressure means (32) has a control means (38) for controlling in an open-loop or closed-loop manner an internal contact-pressure force on the die (22) .

2. Applicator according to Claim 1, **characterized in that** the stabilizing installation (15) is disposed in or on the support member (27).

3. Applicator according to Claim 1 or 2, **characterized in that** the applicator (2) has a dedicated drive (44) for the revolving movement of the die (22).

4. Applicator according to the preamble of Claim 1, **characterized in that** the applicator (2) has a dedicated drive (44) for the revolving movement of the die (22), wherein the contact-pressure means (32) has a control means (38) for controlling in an open-loop or closed-loop manner an internal contact-pressure force on the die (22).

5. Applicator according to Claim 1, 2, 3, or 4, **characterized in that** the applicator (2) has a connector (18) for a handling installation (3), in particular for an industrial robot (73).

6. Applicator according to one of the preceding claims, **characterized in that** the support member (27) is configured so as to be tubular and has a dimensionally stable shell (28).

7. Applicator according to one of the preceding claims, **characterized in that** the support member (27) is mounted so as to be rotatable (43) on a frame (13) of the applicator (2) and is connected in a rotationally locked manner to the die (2).

8. Applicator according to one of the preceding claims, **characterized in that** the support member (27) is coupled to the drive (44).

9. Applicator according to Claim 8, **characterized in that** the drive (44) is controllable in an open-loop or closed-loop manner.

10. Applicator according to one of the preceding claims, **characterized in that** the contact-pressure means (32) is configured as a deformable pressure means cushion (33) that fills the intermediate space (31).

11. Applicator according to Claim 10, **characterized in that** the pressure means cushion (33) has a fluidic pressure medium (35), in particular compressed gas, in a sealing, flexurally elastic, sheathing (34) .

12. Applicator according to one of preceding Claims 10 or 11, **characterized in that** the pressure means cushion (33), in particular the sheathing (34), is connected in a rotationally fixed manner to the support member (27) and to the die (22).

13. Applicator according to one of the preceding claims, **characterized in that** the die (22) is configured as a flexurally elastic continuous circular track (23).

14. Applicator according to one of the preceding claims, **characterized in that** the embossing profile (25) is disposed on the external side (24) of the die material, or on a coating on the external side of the die (22).

15. Applicator according to one of the preceding claims, **characterized in that** the stabilizing installation (15) emits a stabilizing agent (50), wherein the shell (28) of the support member (27), the contact-pressure means (32), and the die (22) are permeable to the stabilizing agent (50).

## Revendications

1. Applicateur pour l'application et le micro-profilage par gaufrage d'un milieu fluide (6) sur un subjectile (5) dans le domaine aérospatial, l'applicateur (2) présentant une matrice (22) déplacée en rotation dotée d'un profil de gaufrage (25), un moyen de pressage (32) pour la matrice (22), et un dispositif de stabilisation (15), en particulier un dispositif de durcissement pour le milieu appliqué (6), **caractérisé en ce que** l'applicateur (2) présente un corps de support creux (27) entouré avec espacement par la matrice (22) en formant un espace intermédiaire (31), le moyen de pressage (32) étant disposé dans l'espace intermédiaire (31), le moyen de pressage (32) présentant un moyen de commande (38) pour commander ou réguler une force de pressage intérieure sur la matrice (22).

2. Applicateur selon la revendication 1, **caractérisé en ce que** le dispositif de stabilisation (15) est disposé dans ou sur le corps de support (27).

3. Applicateur selon la revendication 1 ou 2, **caractérisé en ce que** l'applicateur (2) présente un entraînement propre (44) pour le mouvement de rotation de la matrice (22).

4. Applicateur selon le préambule de la revendication 1, **caractérisé en ce que** l'applicateur (2) présente un entraînement propre (44) pour le mouvement de rotation de la matrice (22), le moyen de pressage (32) présentant un moyen de commande (38) pour commander ou réguler une force de pressage intérieure sur la matrice (22).

5. Applicateur selon la revendication 1, 2, 3 ou 4, **caractérisé en ce que** l'applicateur (2) présente un raccord (18) pour un dispositif de manipulation (3), en particulier pour un robot industriel (73).

6. Applicateur selon l'une quelconque des revendications précédentes, **caractérisé en ce que** le corps de support (27) est réalisé sous forme tubulaire et présente une enveloppe de forme stable (28).

7. Applicateur selon l'une quelconque des revendications précédentes, **caractérisé en ce que** le corps de support (27) est supporté de manière rotative (43) sur un bâti (13) de l'applicateur (2) et est connecté de manière solidaire en rotation à la matrice (2).

8. Applicateur selon l'une quelconque des revendications précédentes, **caractérisé en ce que** le corps de support (27) est accouplé à l'entraînement (44).

9. Applicateur selon la revendication 8, **caractérisé en ce que** l'entraînement (44) peut être commandé ou réglé.

10. Applicateur selon l'une des revendications précédentes, **caractérisé en ce que** le moyen de pressage (32) est réalisé sous forme de coussin de milieu sous pression (33) déformable et remplissant l'espace intermédiaire (31).

11. Applicateur selon la revendication 10, **caractérisé en ce que** le coussin de milieu sous pression (33) présente un milieu sous pression fluidique (35), en particulier un gaz sous pression dans une enveloppe hermétique élastiquement flexible (34).

12. Applicateur selon l'une quelconque des revendications précédentes 10 et 11, **caractérisé en ce que** le coussin de milieu sous pression (33), en particulier l'enveloppe (34), est relié de manière solidaire en rotation au corps de support (27) et à la matrice (22).

13. Applicateur selon l'une quelconque des revendications précédentes, **caractérisé en ce que** la matrice (22) est réalisée sous forme de bande annulaire sans fin élastiquement flexible (23).

14. Applicateur selon l'une quelconque des revendications précédentes, **caractérisé en ce que** le profil de gaufrage (25) est disposé sur le côté extérieur (24) du matériau de matrice ou sur un revêtement extérieur de la matrice (22).

15. Applicateur selon l'une quelconque des revendications précédentes, **caractérisé en ce que** le dispositif de stabilisation (15) émet un agent de stabilisation (50), l'enveloppe (28) du corps de support (27), le moyen de pressage (32) et la matrice (22) étant perméables à l'agent de stabilisation (50).
